# EUROPÄISCHE PATENTSCHRIFT

(11) **EP 0 585 212 B1**
(45) Veröffentlichungstag und Bekanntmachung des Hinweises auf die Patenterteilung: **03.09.1997**
(21) Anmeldenummer: 93890142.8
(22) Anmeldetag: 21.07.1993
(51) Int. Cl.: G01N 21/64, G01N 21/62, G01N 21/17, G01N 21/77

(54) **Sensormembran eines optischen Sensors**
Sensor membrane of an optical sensor
Membrane de palpeur pour un palpeur optique

(30) Priorität: 24.07.1992 AT 1522/92
(43) Veröffentlichungstag der Anmeldung: 02.03.1994
(73) Patentinhaber: AVL Medical Instruments AG, 8207 Schaffhausen (CH)
(72) Erfinder: Klimant, Ingo, A-8063 Graz (AT); Karpf, Hellfried, Dr., A-8043 Graz (AT); Wolfbeis, Otto S., Prof. Dr., A-8046 Graz (AT)
(74) Vertreter: Krause, Walter, Dr. Dipl.-Ing.

(56) Entgegenhaltungen:
- EP-A- 0 190 830
- AT-B- 379 688
- AT-B- 384 891
- AT-B- 387 466
- US-A- 5 030 420
- MIKROCHIMICA ACTA, 1986 III, Springer Verlag, Wien, New York O.S. WOLFBEIS et al. "A New Sensing Material for Optical Oxygen Measurement with the Indicator Embedded in Aqueous Phase" pages 359-366

## Beschreibung

Die Erfindung betrifft eine Sensormembran eines optischen Sensors zur Bestimmung von O₂, H₂O₂, SO₂ oder halogenierter Kohlenwasserstoffe in einer Probe, mit einer homogen in der Polymermatrix der Sensormembran immobilisierten Indikatorsubstanz, welche mit der Probe in zumindest indirektem Kontakt steht und bei einer Änderung des zu messenden Parameters zumindest eine ihrer optischen Eigenschaften ändert, wobei die Indikatorsubstanz ein anorganisches Salz eines Übergangsmetallkomplexes mit α-Diiminliganden enthält.

Es sind bereits eine Vielzahl von Indikatorsubstanzen und Sensormembranen bekannt, welche auf die eingangs erwähnten Substrate mit einer Änderung einer optischen Eigenschaft der Indikatorsubstanz reagieren. Die Änderung dieser Eigenschaft, beispielsweise Fluoreszenzintensität, Fluoreszenzabklingzeit, Absorption u.s.w., kann mit bekannten optischen Verfahren und Meßeinrichtungen erfaßt und der zu messenden Größe der Substratkonzentration zugeordnet werden.

Beispielsweise ist es aus "A New Material for Optical Oxygen Measurement, with the Indicator Embedded in an Aqueous Phase" (Mikrochimica Acta 1986 III, 359-366) bekannt, Indikatorfarbstoffe an Trägermaterialen zu adsorbieren und diese beladenen Trägermaterialien in Polymere einzubetten. Als Indikatorfarbstoff wird ein Rutheniumkomplex nämlich Ruthenium-tris(dipyridyl)-dichlorid (Ru(bpy)₃Cl₂ verwendet. Als Trägermaterial findet Kieselgel Verwendung, welches in Silicon, z.B. RTV-118 (Wacker-Chemie, Burghausen, DE) eingebettet wird. Die entstehenden Sensormembranen zeichnen sich durch hohe Sauerstoffempfindlichkeit aus, haben jedoch nur eine durchschnittliche bis geringe Signalintensität und eine in wäßriger Phase instabile Sensorkennlinie. Nachteiligerweise zeigt sich auch eine ausgeprägte Nichtlinearität der technisch aufwendig herzustellenden Sensormembran.

Weiters ist es in diesem Zusammenhang aus der US-PS 5 030 420 bekannt geworden, Farbstoffe, wie beispielsweise Komplexe der Platinmetalle mit α-Diimin-und Porphyrinliganden in Polymeren wie z.B. PVC, Plexiglas, Silicon- und Naturgummi, Polykarbonat, Teflon u.s.w. zu verwenden. Als Liganden werden unter derem 2,2'-bipyridin (bpy), 1,10-phenantrolin (phen) und 4,7-diphenyl-1,20-phenantrolin(diph) genannt. Der Farbstoff kann durch Diffusion in das Polymer eingebracht oder mit dem Prepolymer vermischt werden. Schließlich kann auch eine ionische oder kovalente Bindung an das Polymer erfolgen. Dadurch können jedoch wesentliche Farbstoffeigenschaften negativ beeinflußt werden. So ist insbesondere die in dieser US-PS speziell hervorgehobene Immobilisierung von Ru(diph)-perchlorat in Silicon GE RTV SILASTIC 118 (General Electric USA) kein Beweis für eine Lösung des Farbstoffes direkt in der Siliconmatrix, da das hier verwendete Silicon Füllstoffe aufweist und der Farbstoff daran adsorbiert ist und nicht in der Matrix gelöst vorliegt.

Weiters ist aus der EP-A 0 190 830 die homogene Immobilisierung von Übergangsmetallkomplexen in Polymeren mit hoher Sauerstoffpermeabilität bekannt geworden, welche zu den eingangs beschriebenen Sensormembranen führt. Im zuletzt genannten Beispiel erfolgt eine homogene Immobilisierung von beispielsweise Rutheniumkomplexen in PVC mit geringen Weichmacherkonzentrationen. Dieses Material wird dann anstelle des Mantels eines optischen Lichtleiters angebracht und über den Lichtleiter optisch angeregt. Als Farbstoffe werden Ruthenium-, Osmium- und Iridiumkomplexe genannt, wobei die Komplexe mit einem Gegenion elektrisch abgesättigt sind. Als Polymere finden PVC, Polyvinylbutyral sowie Polyvinylacetat Verwendung. Als Weichmacher werden Phthalsäure-, Benzoesäure-, Sebacinsäure- und Adipinsäurederivate sowie, Paraffine verwendet. Als Lösungsmittel werden beispielsweise Aceton und Ethanol genannt. Eine typische Sensormembran aus der EP 0 190 830 besteht somit aus PVC, Ru(diph)₃-perchlorat als Farbstoff, Diisobutylphthalat als Weichmacher und Methylenchlorid als Lösungsmittel.

Bekannte Sensormembranen weisen somit anorganische Salze von Übergangsmetallkomplexen auf, die an Trägermaterialien gebunden werden, welche entweder im Polymer als Füllstoff enthalten sind oder dem Polymer extra zugesetzt werden bzw. in den Weichmacheranteilen von Kunststoffen gelöst werden . Bei den Polymeren handelt es sich in den beschriebenen Fällen im wesentlichen um Silicone, welche bei Zimmertemperatur kondensationsvernetzend sind (Silicon RTV-118 von Wacker-Chemie, Burghausen DE oder GE RTV SILASTIC 118 von General Electric USA), bzw. um ein typisches PVC-Material.

Aufgabe der Erfindung ist es, eine Sensormembran vorzuschlagen, welche die durch die Probe nicht auswaschbare Indikatorsubstanz möglichst homogen verteilt enthält, sowie eine hohe Empfindlichkeit für die eingangs angeführten Analyte aufweist, wobei eine gut reproduzierbare Herstellung derartiger Sensormembranen gewährleistet sein soll.

Diese Aufgabe wird erfindungsgemäß dadurch gelöst, daß die Polymermatrix im wesentlichen aus zumindest einer Substanz aus der Gruppe der Cellulosederivate, der Polystyrole, der Polytetrahydrofurane oder deren Derivate besteht welche zusammen mit der Judikatersubstanz in einem Lösungsmittel gelöst wird und auschließend das Lösungsmittel abgedampft wird, sodaß die Judikatersubstanz nach dem Abdampfen des Lösungsmittels in der Polymermatrix homogen verteilt vorliegt.

Überraschenderweise konnte festgestellt werden, daß die erfindungsgemäßen Übergangsmetallkomplexe in den genannten Polymeren sehr gut löslich sind, wobei weder Trägersubstanzen noch Weichmacher eingesetzt werden müssen. Weiters sind die Indikatorsubstanzen durch die Probe nicht auswaschbar, wobei vorteilhafterweise sehr hohe Indikatorkonzentrationen und dadurch sehr hohe Signalintensitäten zu realisieren sind. Dank der hohen Signalintensität lassen sich extrem dünne und damit extrem schnell ansprechende Sensoren herstellen. Die Empfindlichkeit gegenüber Sauerstoff kann durchaus mit Sensormembranen verglichen werden, welche aus dem eingangs erwähnten Artikel aus Mikrochimica Acta bekannt sind.

In einer Ausführungsvariante der Erfindung ist vorgesehen, daß die Polymermatrix ein Gemisch aus Ethylcellulose und Cellulosetriacetat enthält. bzw. daß die Polymermatrix ein Gemisch aus Polystyrol und Polytetrahydrofuran enthält.

Schließlich ist erfindungsgemäß vorgesehen, daß das anorganische Salz des Übergangsmetallkomplexes als Zentralatom Ru, Os, Ir, Rh, Pd, Pt oder Re; als Liganden 2,2-bipyridin (bpy), 1,10-phenantrolin (phen) oder 4,7-diphenyl-1,10-phenantrolin (diph) und als Gegenion ClO₄, Cl oder SO₄ enthält.

Als konkrete Ausführungsbeispiele werden im folgenden Herstellungsverfahren einiger erfindungsgemäßer Sensormembranen beschrieben.

### AUSFÜHRUNGSBEISPIEL 1 :

Man löst 5 g Ethylcellulose in 100 ml Chloroform, wiegt eine Menge von 5x10⁻⁵ mol/l des Indikatorfarbstoffes Ru(diph)₃(ClO₄)₂ ein und löst diesen durch Rühren auf. Die Lösung wird durch bekannte Methoden, beispielweise, durch Spincoaten oder durch Rakeln (Auftragen mit einer Abziehklinge) als dünne Schicht auf einer Mylar-Trägerfolie aufgezogen. Das Lösungsmittel wird abgedampft.

### AUSFÜHRUNGSBEISPIEL 2 :

Es werden 5 g Cellulosetriacetat in 100 ml Chloroform aufgelöst und 5x10⁻⁴ mol/l des Indikatorfarbstoffes Ru(diph)₃(ClO₄)₂ eingewogen und die Mischung durch Rühren gelöst. Diese Lösung wird durch bekannte Methoden, beispielsweise durch Spincoaten oder Rakeln als homogene Schichte auf Mylar aufgezogen und das Lösungsmittel abgedampft.

### AUSFÜHRUNGSBEISPIEL 3:

Es wird eine Mischung aus gleichen Anteilen Polystyrol und Polytetrahydrofuran in Tetrahydrofuran gelöst, eine Menge von 3x10⁻⁵ mol/l der Indikatorsubstanz Ru(diph)₃(ClO₄)₂ eingewogen und durch Rühren gelöst. Die Lösung wird durch bekannte Methoden, beispielsweise Spincoaten oder Rakeln in einer Schichtstärke von 3 µm auf Mylar aufgezogen und das Lösungsmittel abgedampft.

## Patentansprüche

1. Sensormembran eines optischen Sensors zur Bestimmung von O₂, H₂O₂, SO₂ oder halogenierter Kohlenwasserstoffe in einer Probe, mit einer homogen in der Polymermatrix der Sensormembran immobilisierten Indikatorsubstanz, welche mit der Probe in zumindest indirektem Kontakt steht und bei einer Änderung des zu messenden Parameters zumindest eine ihrer optischen Eigenschaften ändert, wobei die Indikatorsubstanz ein anorganisches Salz eines Übergangsmetallkomplexes mit α-Diiminliganden enthält, **dadurch gekennzeichnet**, daß die Polymermatrix im wesentlichen aus zumindest einer Substanz aus der Gruppe der Cellulosederivate, der Polystyrole, der Polytetrahydrofurane oder deren Derivate besteht, welche zusammen mit der Indikatorsubstanz in einem Lösungsmittel gelöst wird und auschließend das Lösungsmittel abgedampft wird, sodaß die Indikatorsubstanz nach dem Abdampfen des Lösungsmittels in der Polymermatrix homogen verteilt vorliegt.

2. Sensormembran nach Anspruch 1 **dadurch gekennzeichnet**, daß die Polymermatrix Ethylcellulose oder Cellulosetriacetat enthält.

3. Sensormembran nach Anspruch 1, **dadurch gekennzeichnet**, daß die Polymermatrix ein Gemisch aus Ethylcellulose und Cellulosetriacetat enthält.

4. Sensormembran nach Anspruch 1, **dadurch gekennzeichnet,** daß die Polymermatrix ein Gemisch aus Polystyrol und Polytetrahydrofuran enthält.

5. Sensoremembran nach einem der Ansprüche 1 bis 4, **dadurch gekennzeichnet,** daß das anorganische Salz des übergangsmetallkomplexes als Zentralatom Ru, Os, Ir, Rh, Pd, Pt oder Re; als Liganden 2,2'-bipyridin (bpy), 1,10-phenantrolin (phen) oder 4,7-diphenyl-1,10-phenanthrolin (diph) und als Gegenion ClO₄, Cl oder SO₄ enthält.

## Claims

1. Sensor membrane of an optical sensor for detection of O₂, H₂O₂, SO₂ or halogenated hydrocarbons in a sample, with an indicator substance that is homogeneously immobilized in the polymer matrix of the sensor membrane and is, at least indirectly, in contact with the sample, changing at least one of its optical properties upon a change of the parameter to be measured, said indicator substance containing an inorganic salt of a transition metal complex with α-diimine ligands, **characterized in that** the polymer matrix essentially consists of at least one substance from the group of cellulose derivatives, polystyrenes; polytetrahydrofuranes, or their respective derivatives, which, together with the indicator substance, is dissolved in a solvent, said solvent being subsequently evaporated, such that the indicator substance is provided in the polymer matrix in homogeneous distribution upon evaporation of the solvent.

2. Sensor membrane as in claim 1, **characterized in that** the polymer matrix contains ethyl cellulose or cellulose triacetate.

3. Sensor membrane as in claim 1, **characterized in that** the polymer matrix contains a mixture of ethyl cellulose and cellulose triacetate.

4. Sensor membrane as in claim 1, **characterized in that** the polymer matrix contains a mixture of polystyrene and polytetrahydrofuran.

5. Sensor membrane as in any of claims 1 to 4, **characterized in that** the inorganic salt of the transition metal complex contains Ru, Os, Ir, Rh, Pd, Pt, or Re as a central atom, and 2,2'-bipyridine (bpy), 1,10-phenanthroline (phen), or 4,7-diphenyl-1,10-phenanthroline (diph) as a ligand, and ClO₄, Cl or SO₄ as a compensating ion.

## Revendications

1. Membrane de capteur, prévue pour un capteur optique destiné à appréhender la présence de O₂, H₂O₂, SO₂ ou d'hydrocarbures halogénés dans un échantillon, avec une substance indicatrice immobilisée de façon homogène dans la matrice polymère de la membrane de capteur, substance indicatrice mise au moins en contact indirect avec l'échantillon et subissant une modification d'au moins l'une de ses propriétés optiques, en cas de modification du paramètre à mesurer, la substance indicatrice contenant un sel inorganique d'un complexe de métal de transition, avec des α-diiminligands, caractérisée en ce que la matrice polymère est constituée essentiellement d'au moins une substance issue du groupe des dérivés cellulose, des polystyrènes, des polytétrahydrofuranes ou de leurs dérivés, dissous conjointement avec la substance indicatrice dans un solvant, le solvant étant ensuite évaporé, de manière que la substance indicatrice se présente répartie de façon homogène dans la matrice polymère après évaporation du solvant.

2. Membrane de capteur selon la revendication 1, caractérisée en ce que la matrice de polymère contient de l'éthylcellulose ou du triacétate de cellulose.

3. Membrane de capteur selon la revendication 1, caractérisée en ce que la matrice polymère contient un mélange constitué d'éthylcellulose et de triacétate de cellulose.

4. Membrane de capteur selon la revendication 1, caractérisée en ce que la matrice polymère contient un mélange de polystyrène et de polytétrahydrofurane.

5. Membrane de capteur selon l'une des revendications 1 à 4, caractérisée en ce que le sel inorganique du complexe de métal de transition contient à titre d'atome central : Ru, Os, Ir, Rh, Pd, Pt ou Re; à titre de ligands la 2,2'-bipyridine (bpy), la 1,10-phénantroline (phen) ou la 4,7-diphényl-1,10-phénanthroline (diph) et à titre d'ion conjugué ClO₄, Cl ou SO₄.
